# EUROPÄISCHE PATENTANMELDUNG

(11) **EP 0 916 247 A1**
(43) Veröffentlichungstag der Anmeldung: **19.05.1999**
(21) Anmeldenummer: 98120547.9
(22) Anmeldetag: 30.10.1998
(51) Int. Cl.: A01C 15/00

(54) **Schleuderstreuer**

(30) Priorität: 05.11.1997 DE 19748838
(71) Anmelder: Amazonen-Werke H. Dreyer GmbH & Co. KG, D-49205 Hasbergen (DE)
(72) Erfinder: Dreyer, Heinz, Dr. Dipl.-Ing., 49205 Hasbergen (DE)

(57) **Zusammenfassung**

Schleuderstreuer mit zumindest zwei Vorratsbehältern (1,2) für die getrennte Mitführung von zumindest zwei verschiedenen Materialsorten und/oder Streustoffen, wobei jedem Vorratsbehälter und/oder jedem Streustoff jeweils zumindest zwei eigene Dosierorgane (20) und zumindest zwei eigene Verteilorgane (14,15) zugeordnet sind, wobei das jeweilige Dosierorgan (20) dem ihm zugeordneten Verteilorgan (14,15) das auszubringende Material in einstellbarer Weise zuleitet, wobei die verschiedenen Materialsorten und/oder Streustoffe von jeweils verschiedenen Verteilorganen (14,15) verteilt werden, wobei das Material zumindest auf einige der Schleuderscheiben (14,15) mittels Zuleitungsschächte (24,36) geleitet wird. Die Wandungen der Zuleitungsschächte (24,36) bestehen zumindest teilweise aus einem durchsichtigen Material (40).

## Beschreibung

Die Erfindung betrifft einen Schleuderstreuer gemäß des Anspruches 1 und ein Verfahren zum Einsatz eines Schleuderstreuers gemäß des Oberbegriffes des Patentanspruches 7.

Ein derartiger Schleuderstreuer ist in der EP 04 97 166 A1 beschrieben. Bei diesem Schleuderstreuer wird zumindest einigen der Schleuderscheiben das Material über Zuleitungsschächten zugeleitet. Insbesondere wenn Materialien, die in kleinen Mengen ausgebracht werden sollen, wie beispielsweise Raps oder Flachs, ist es nicht möglich, in einfacher Weise festzustellen, wieviel Material sich in dem Vorratsbehälter befindet.

Der Erfindung liegt die Aufgabe zugrunde, in einfacher Weise den Schleuderstreuer so auszustatten, daß einfach festgestellt werden kann, wieviel Material sich noch im unteren Bereich des Vorratsraumes und/oder oberhalb der Dosierorgane befindet.

Diese Aufgabe wird erfindungsgemäß dadurch gelöst, daß die Wandungen der Zuleitungsschächte zumindest teilweise aus einem durchsichtigen Material bestehen. Durch diese 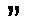 durchsichtigen Fenster" in den Zuleitungsschächten ist sehr einfach feststellbar, wann die kritische Restmenge erreicht wird, d.h., wenn nicht mehr gewährleistet ist, daß in gleichmäßiger Weise das Material bzw. der auszubringende Streustoff über das Dosierorgan dem Verteilorgan zugeleitet wird. Um in einfacher Weise die noch in dem Zuleitungsschacht befindliche Menge und den Beginn der kritischen Restmenge abschätzen zu können, ist vorgesehen, daß im Bereich des durchsichtigen Materials Skalen und/oder Markierungen an den Zuleitungsschächten angeordnet sind. Die Skalen und/oder Markierungen können Liter-Angaben sein.

Es ist auch möglich, innerhalb des Vorratsbehälters und oberhalb der Dosierorgane jeweils einen Zuführschacht für das Ausbringen von Material, welches in kleinen Mengen pro Flächeneinheit ausgebracht wird, vorzusehen.

Desweiteren ist vorgesehen, daß an jedem Zuleitungsschacht eine Markierung angebracht ist, welche die minimalste Restmenge (kritische Restmenge), bis zu welcher Material ausgebracht werden kann und zu welchem Zeitpunkt spätestens Material und/oder Streustoff nachgefüllt werden muß, kennzeichnet.

Weiterhin ist in einer Ausführungsform vorgesehen, daß zumindest im Bereich der Zuleitungsschächte jeweils zumindest ein Füllstandsensor zur Überwachung der Restmenge angeordnet ist. Hierdurch kann direkt in der Fahrerkabine ein Signal abgegeben oder angezeigt werden, wenn die kritische Restmenge erreicht ist. Desweiteren ist vorgesehen, daß die Sensoren mit einer Überwachungseinrichtung verbunden sind, die spätestens bei Erreichen der kritischen Restmenge ein Warnsignal abgibt.

Desweiteren ist bei einem Verfahren zum Einsatz eines Schleuderstreuers gemäß des Oberbegriffes des Anspruches 7 zum Einsatz von Materialien, die in kleinen Mengen pro Flächeneinheit ausgebracht werden, um bei diesem Ausbringen nur geringe Restmengen zu verwirklichen, vorgesehen, daß beim Ausbringen von zwei Materialsorten, daß das Material, welches in kleineren Mengen als das andere Material ausgebracht wird, in den Vorratsbehälter, in welchem die Zuleitungsschächte zugeordnet sind, und/oder in die Zuleitungsschächte eingefüllt wird.

Weitere Einzelheiten der Erfindung sind den übrigen Ansprüchen, der Beispielsbeschreibung und den Zeichnungen zu entnehmen. Hierbei zeigen
- Fig.1: den Schleuderdüngerstreuer in der Ansicht von hinten und in Prinzipdarstellung,
- Fig.2: den Schleuderdüngerstreuer gemäß Fig.1 in Seitenansicht und in Prinzipdarstellung,
- Fig.3: den Zuführschacht in einem größeren Maßstab,
- Fig.4: einen weiteren Schleuderdüngerstreuer in der Ansicht von hinten und in Prinzipdarstellung,

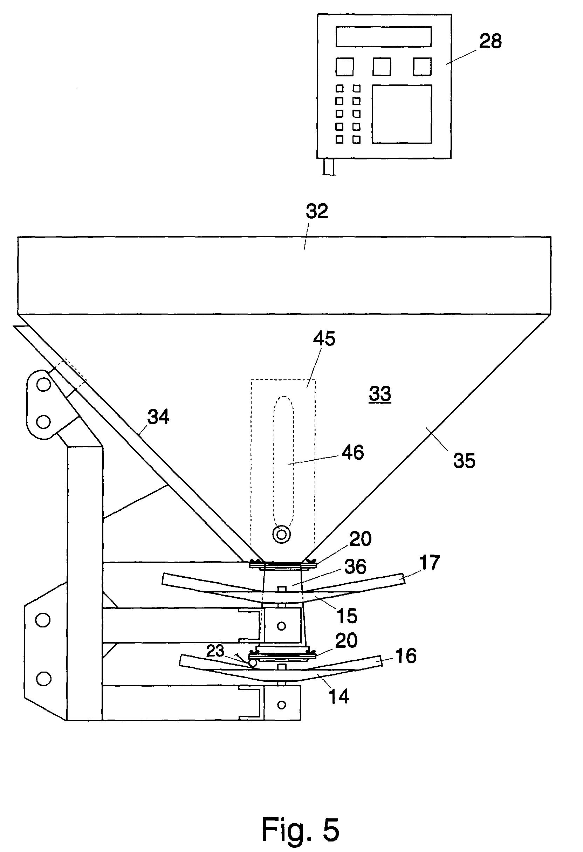

- Fig.5: den Schleuderdüngerstreuer gemäß Fig.4 in Seitenansicht und

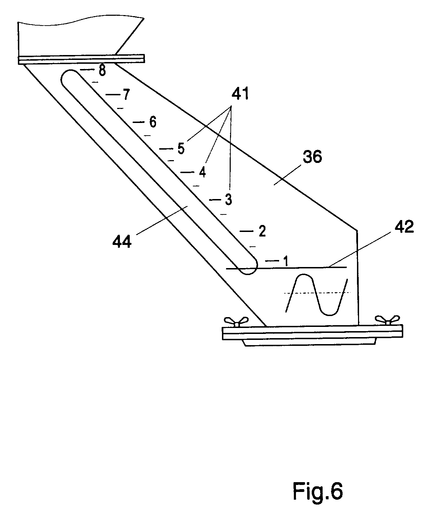

- Fig.6: den Zuführschacht in einem größeren Maßstab.

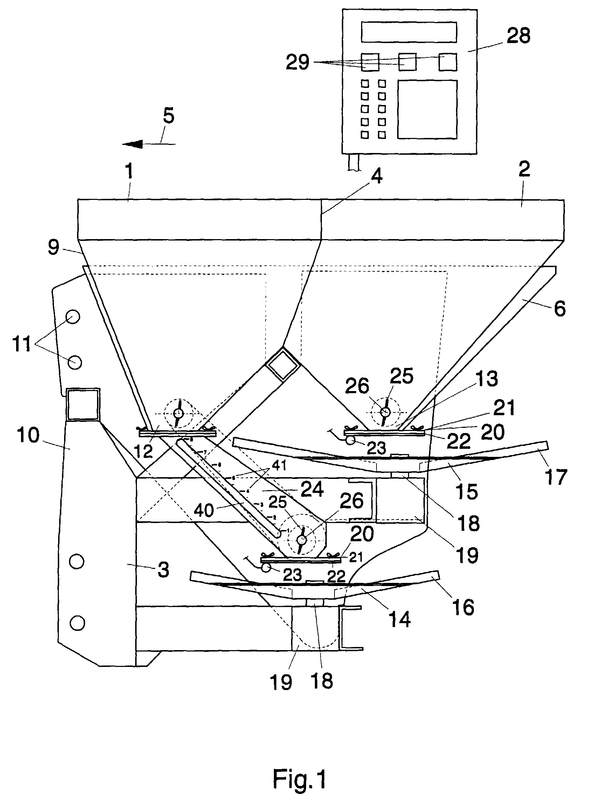

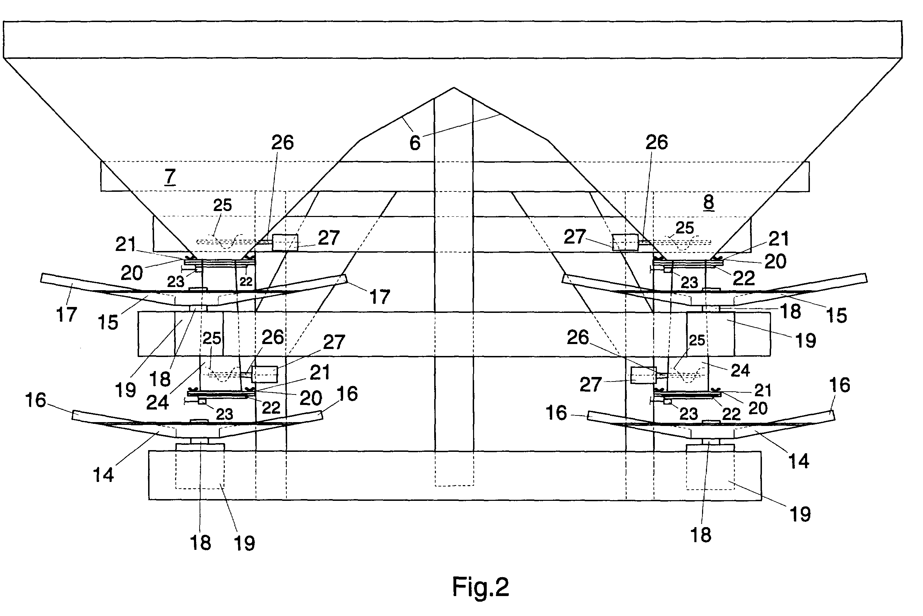

Der Schleuderdüngerstreuer gemäß den Fig.1 und 2 weist die beiden hintereinander angeordneten Vorratsbehälter 1 und 2 sowie den Rahmen 3 auf. Die beiden Vorratsbehälter 1 und 2 sind durch die Trennwand 4 voneinander getrennt. Die beiden Vorratsbehälter 1 und 2 sind durch das in Fahrtrichtung 5 sich erstreckende dachförmige Mittelteil 6 jeweils im unteren Bereich in die Auslauftrichter 7 bzw. 8 aufgeteilt. Auf der Vorderseite 9 des vorderen Vorratsbehälters 1 ist ein den Schleuderdüngerstreuer tragender Dreipunktanbaurahmen 10, der Teil des Rahmens 3 ist, angeordnet. Aufgrund seiner durchgehenden Ausbildung liegt das dachförmige Mittelteil 6 der beiden Vorratsbehälter 1 und 2 liegt auf gleicher Höhe. Der obere Bereich des dachförmigen Mittelteils 6 ist auf seiner Vorderseite mit dem Dreipunktanbaurahmen 10 im Höhenbereich des oberen Dreipunktanlenkpunktes 11 des Dreipunktanbaurahmens 10 verbunden.

Jedem unteren Trichterende 12 und 13 der Vorratsbehälter 1 und 2 ist eine Schleuderscheibe 14 bzw. 15 mit darauf angeordneten Wurfschaufeln 16 bzw. 17 zugeordnet. Die Wurfschaufeln 16 bzw. 17 können in Scheibenebene mit unterschiedlichen Winkeln zur Radialen eingestellt werden, um so durch die unterschiedliche Winkelanstellung der Wurfschaufeln 16 bzw. 17 für unterschiedliche Materialsorten und Arbeitsbreiten eine gleichmäßige Düngerverteilung erzielen zu können.

Weiterhin kann vorgesehen sein, daß verschieden ausgebildete Wurfschaufel- oder Schleuderscheibensätze zur Anpassung an verschiedene Arbeitsbreiten- und Streubreitenbereiche zum Einsatz kommen.

Die Schleuderscheiben 14 bzw. 15 sind aus diesem Grunde auswechselbar auf ihren Antriebswellen 18 angeordnet. Die Schleuderscheiben 14 bzw. 15 werden mittels Hydraulikmotoren 19 angetrieben.

Den Trichterenden 12 und 13 sind Dosierorgane 20 zugeordnet. Den Trichterenden 13 des hinteren Vorratsbehälters 2 sind als Bodenplatten 21 mit Auslauföffnungen, die über Schieber 22 mittels Einstelleinrichtungen 23 in ihrer Öffnungsweite einzustellen und zu verschließen sind, ausgebildete Dosierorgane zugeordnet.

Den vorderen Trichterenden 12 ist jeweils ein das Material von den Trichterenden 12 zu den Schleuderscheiben 14 leitendes Leitelement 24 zugeorndet. Dieses Leitelement ist als Zuführschacht mit an dessen unteren Enden angeordnetem Dosierorgan 20 ausgebildet. Der Zuführschacht 24 erweitert sich stetig nach unten. Dieses Dosierorgan 20 weist eine Bodenplatte 21 mit Auslauföffnung auf. Die Auslauföffnung ist über einen Schieber 22 mittels Einstelleinrichtungen 23 in ihrer Öffnungsweite einstellbar und verschließbar.

Oberhalb jeder Bodenplatte 21 ist jeweils ein Rührorgan 25 auf einer Rührwelle 26 angeordnet. Auch dem vorderen Trichterende 12 ist eine Rührwelle 26 mit Rührelementen zugeordnet. Die Rührwellen 26 werden jeweils über einen Hydraulikmotor 27 in bekannter und daher nicht näher erläuterter Weise angetrieben.

Den Hydraulikmotoren 19 sind nicht dargestellte Regeleinrichtungen zum Einstellen der Drehzahl der die Schleuderscheibe antreibenden Hydraulikmotoren zugeordnet. Über diese Regeleinrichtungen kann die Drehzahl für alle Schleuderscheiben 14, 15 in gleicher Größe, jedoch auch in unterschiedlicher Größe eingestellt werden. Über die den Dosierorganen 20 zugeordneten Einstelleinrichtungen 23 ist die jeder Schleuderscheibe 14, 15 zugeleitete Materialmenge aus den Vorratsbehältern 1 bzw. 2 in gemeinsamer oder unabhängiger Weise einstellbar.

Die Einstellung der Drehzahlen der Schleuderscheiben 14, 15 über die Hydraulikmotoren 19 und der zugeordneten Regeleinrichtung erfolgt in vorteilhafter Weise über ein elektronisches Bordcomputersystem 28. Über dieses Bordcomputersystem 28 sind die Einstellwerte abrufbar. In dem Bordcomputersystem 28 sind die Einstelldaten für den Schleuderstreuer sowie Applikationskarten abgespeichert.

Hierbei sind in dem Bordcomputersystem 28 die Drehzahlen der Schleuderscheiben 14, 15 und die Einstellung der Dosierorgane 20 über die Einstelleinrichtung 23 und somit die Ausbringmengen abgespeichert. Hierbei können Funktionsdaten in der Weise hinterlegt sein, daß bei einer Änderung der Drehzahl der Schleuderscheiben 14, 15 automatisch über eine Verstellung der Dosierorgane 20 durch die Einstelleinrichtungen 23 eine Änderung der erfolgt.

Desweiteren ist das Bordcomputersystem 28 derart ausgebildet, daß in einem ersten Schritt zur Einstellung des Grenzstreuen die Drehzahl der der Grenze zugewandten Schleuderscheibe 14, 15 und die dieser Schleuderscheibe 14, 15 zugeführten Materialmenge reduziert wird. Hierdurch wird eine steil abfallende Streuflanke im Grenzbereich erreicht. Durch die Reduzierung der Ausbringmenge wird eine Überdüngung im Randbereich ausgeschlossen. In einem zweiten und evtl. dritten Schritt kann dann die Drehzahl der Schleuderscheibe 14, 15 und evtl. zusätzlich aus die Ausbringmenge reduziert werden. Hierzu weist das Bordcomputersystem 28 eine oder mehrere Tasten 29 auf, mittels welcher die einzelnen Schritte einleitbar sind, so daß die Drehzahl der Schleuderscheiben und/oder die Ausbringmenge reduziert wird.

Desweiteren weist das Bordcomputersystem 28 eine Taste 29 zum Umstellen von Grenzstreuen auf Normalstreuen auf. Hierbei werden die entsprechend im Bordcomputersystem 28 hinterlegten Daten abgerufen, so daß eine automatische Einstellung erfolgt.

Desweiteren wird das Bordcomputersystem 28 nach Beenden des Grenzstreuen auf Normalstreuen umgeschaltet. Dieses Umschalten kann durch einen Tastendruck geschehen. Hierbei ist dann vorgesehen, daß bei einem Nichtumschalten von Grenzstreuen auf Normalstreuen ein Warnelement vorgesehen ist, welches ein Warnsignal abgibt, so daß der Bediener dann entsprechend umschalten kann.

Es ist jedoch auch möglich, daß das Bordcomputersystem 28 automatisch nach Beenden des Grenzstreuens, wenn die Dosierorgane 20 zum Wendevorgang abgeschaltet werden und nach dem Wendevorgang wieder eingeschaltet werden, auf die Einstellparameter für die Drehzahl der Schleuderscheiben 14, 15 und die Ausbringmenge für das Normalstreuen umschaltet. Diese Umschaltung kann über das Bordcomputersystem 28 auch in Abhängigkeit von Applikationskarte in Verbindung mit einem Standortbestimmungssystem erfolgen.

Desweiteren können nicht dargestellte Mittel zur Verstellung der Aufgabefläche des Material auf die Schleuderscheiben 14, 15 vorgesehen sein, wobei diesen Mitteln zur Aufgabenflächenverstellung Einstellmittel zugeordnet sind, die mit dem Bordcomputersystem 28 verbunden sind. Eine Einstellung der Aufgabefläche bzw. Verstellung der Aufgabefläche des Materials auf die Schleuderscheiben 14, 15 kann bei einer Arbeitsbreitenveränderung erforderlich sein, um auch unter allen vorkommenden Streubedingungen eine gleichmäßige Materialverteilung zu erhalten.

Desweiteren können die Rührorgane 25 jeweils beim Abschalten des zugehörigen Dosierorgans 20 mittels entsprechender Einrichtungen stillgesetzt bzw. abgeschaltet werden. Dieses geschieht durch Abschalten der Hydraulikmotore 27.

Desweiteren lassen sich für den Schleuderstreuer verschiedene Arbeitsbreiten auf einfache Weise einstellen. Die mit Wurfschaufeln 16, 17 besetzten Schleuderscheiben 14, 15 verteilen das von den Dosierorganen 20 zugeführte Material in einander angrenzenden, sich teilweise überlappenden Streubahnen breitflächig auf der Bodenoberfläche. Da die Schleuderscheiben 14, 15 von eigenen regelbaren Hydraulikmotoren 19 angetrieben werden, läßt sich die Drehzahl entsprechend reduzieren, so daß eine Arbeits- und Wurfweitenvariation möglich ist. Desweiteren kann durch das Ein- und Abschalten der Materialzuführung zu der jeweiligen Schleuderscheibe 14, 15 über die den Dosierorganen mittels der zugeordneten Einstellvorrichtung 23 die Arbeitsbreite in Teilbreiten reduziert werden. Hierbei wird eine Grobeinstellung der Arbeitsbreite bzw. die Grobabstufung der Arbeitsbreite des Schleuderstreuers in vier Stufenbereichen durch das Ein- und Abschalten der Dosierorgane 20 erreicht, während die Feineinstellung bzw. Feinabstufung der Arbeitsbreite mittels der Drehzahlvariation der gesamten Arbeitsbreitenbereich von beispielsweise 12 bis 48 m durchführen. Diese Einstellungen können beispielsweise über das Bordcomputersystem 28, in welchem die entsprechenden Funktionsdaten hinterlegt sind, vorgenommen werden.

Hierbei kann in dem Bordcomputersystem 28 eine derartige Funktionsdatenverknüpfung hinterlegt sein, daß bei einer Änderung der Arbeitsbreite durch Drehzahlvariation der Schleuderscheibe bzw. der Schleuderscheiben 14, 15 während des Ausbringvorganges jeweils eine Anpassung der Ausbringmenge durch Einstellung der zugehörigen Dosierorgane 20 erfolgt.

Außerdem läßt sich durch die getrennte Ansteuerung der den Dosierorganen 20 zugeordneten Einstelleinrichtungen 23 die Ausbringmenge in Teilbreiten verändern; also eine Teilbreiten bestimmte ± Schaltung realisieren.

Den Zuführschächten 24 ist ein Fenster zugeordnet, welches mit einem durchsichtigen Material abdeckbar ist. Somit besteht der Zuführschacht 24 zumindest teilweise aus einem durchsichtigen Material. Es ist auch möglich, ein oder mehrere Wände des Zuführschachtes 24 ganz aus durchsichtigem Material herzustellen. Im Bereich des durchsichtigen Materials 40 sind Skalen 41 oder Markierungen an den Zuleitungsschächten 24 angeordnet, welche eine Liter-Skala darstellt. Desweiteren ist eine Markierung 42 angebracht, die die minimalste Restmenge (die kritische Restmenge), bis zu welcher Material ausgebracht werden kann, kennzeichnet. Wenn das sich in demZuleitungsschacht 24 befindliche Material diese Marke 42 unterschreitet, ist nicht mehr gewährleistet, daß das Material von dem jeweiligen Dosierorgan 20 in gleichmäßiger Weise dem Verteilorgan 14 zugeleitet wird. Dieses bedeutet, wenn das sich in dem Zuführschacht 24 befindliche Material diese Marke 41 unterschreitet bzw. sich dieser Marke 42 nähert, daß dann, wenn noch weiterhin Material ausgebracht werden soll, Material nachzufüllen ist.

Zusätzlich kann auch für diese Markierung 42 ein Füllstandssensor 43 zur Überwachung der Restmenge angeordnet sein. Sinnvoller Weise ist dieser Sensor 43 über eine Leitung mit der Überwachungseinrichtung 28 verbunden, die dem Schlepperfahrer ein Warnsignal gibt.

In dem Vorratsbehälter 1, der den Zuleitungsschächten 24 zugeordnet ist, wird beim Ausbringen von zwei Materialsorten, die in unterschiedlichen Mengen ausgebracht werden, die Materialsorte eingefüllt, welche in kleineren Mengen ausgebracht wird.

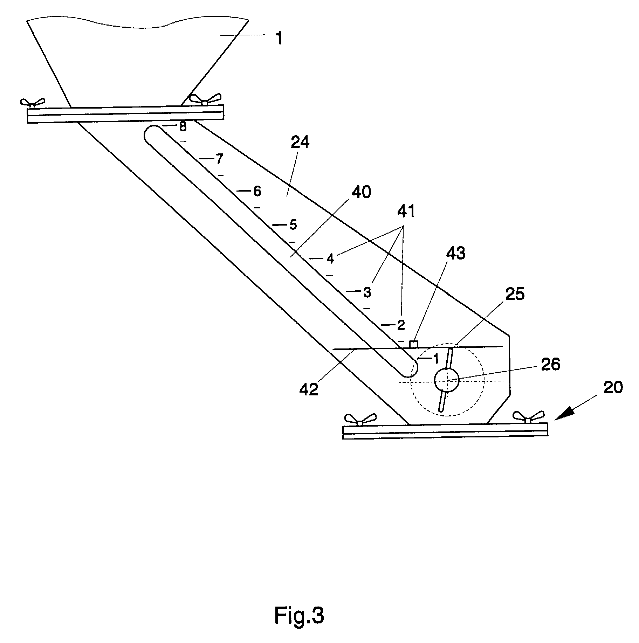

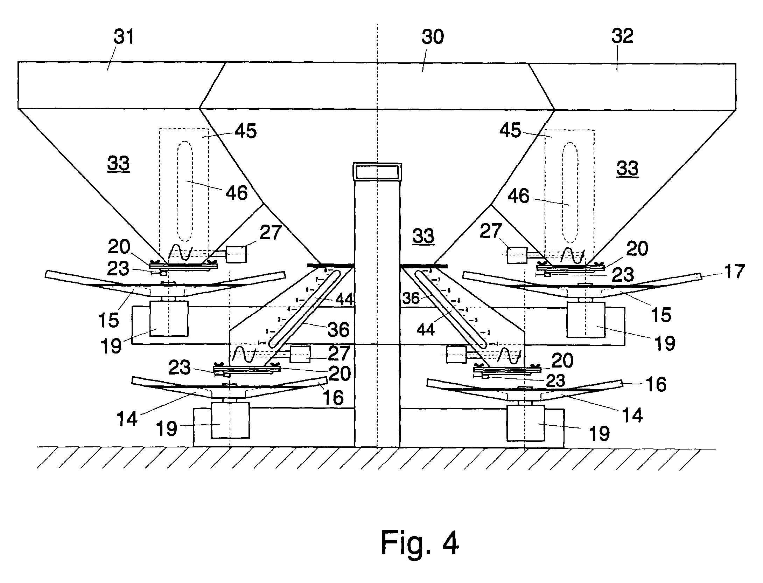

Der Schleuderdüngerstreuer gemäß den Fig.3 und 4 unterscheidet sich von dem Schleuderdüngerstreuer gemaß den Fig.1 und 2 zunächst dadurch, daß die Vorratsbehälter 30, 31 und 32 nicht hintereinander sondern nebeneinander angeordnet sind. Hierbei ist ein mittlerer Vorratsbehälter 30 und zwei seitlich zu dem mittleren Vorratsbehälter 30 angeordnete Vorratsbehälter 31 und 32 vorgesehen. Die unteren Trichterenden 33 der Vorratsbehälter 30, 31 und 32 liegen auf gleicher Höhe. Die vorderen und hinteren Trichterwände 34 und 35 der Vorratsbehälter 30, 31 und 32 fluchten in Seitenansicht gesehen miteinander.

Den unteren Enden 33 der Vorratsbehälter 30, 31 und 32 sind Dosierorgane 20 zugeordnet, die das Material den diesen Vorratsbehältern 30, 31 und 32 zugeordneten Schleuderscheiben 14, 15, die mit Wurfschaufeln 16, 17, die in Scheibenebene in unterschiedlichen Winkelanstellung einstellbar sind, zuführen. Die den äußeren Vorratsbehältern 31 und 32 zugeordneten Schleuderscheiben 15 sind höher angeordnet als die dem mittleren Vorratsbehälter 30 zugeordneten Schleuderscheiben 15. Die den unteren Trichterenden 33 des mittleren Vorratsbehälters 30 zugeordneten Schleuderscheiben 14 sind die das von den unteren Trichterenden 33 zu den unteren Schleuderscheiben 15 leitenden und als Zuleitungsschächte 36 ausgebildete Leitelemente zugeordnet. An dem unteren Ende jedes Zuleitungsschachtes 36 befindet sich ein Dosierorgan 20. Die Zuleitungsschächte 36 sind von den Trichterenden 33 des mittleren Vorratsbehälters 30 zur Seite und nach unten geführt.

Die Dosierorgane 20 entsprechen den Dosierorganen gemäß dem Schleuderstreuer in Fig.1 und 2.

Das in den Zuleitungsschächten 36 angeordnete Fenster 44 entspricht den in den Zuleitungsschächten 24 angeordneten Fenstern 40 mit zugehörigen Markierungen 41 entsprechend der Maschine nach den Fig.1 bis 3.

Wenn mit sämtlichen Verteilorganen 14 und 15 Material in sehr kleinen Mengen ausgebracht werden soll, um möglichst geringe Restmengen zu erhalten, werden in den Vorratsbehältern 31 und 32, denen keine Zuführschächte 36 zugeordnet sind, Zuleitungsschächte 45 eingesetzt, damit möglichst wenig Restmenge im Vorratsbehälter 31 und 32 verbleibt. Auch diese Zuleitungsschächte 45 weisen mit durchsichtigem Material abgedeckte Fenster 46 mit Markierungen 41 auf. Auch ist es möglich, diesen Zuleitungsschächten 45 Füllstandssensoren 43, zur Anzeige bei Erreichen der kritischen Restmenge zuzuordnen.

Selbstverständlich können die in dem Vorratsbehälter 31 und 32 angeordneten Zuleitungsschächte 45 auch in dem Vorratsbehälter 2 der Maschine gemäß den Fig.1 bis 3 angeordnet werden.

## Patentansprüche

1. Schleuderstreuer mit zumindest zwei Vorratsbehältern für die getrennte Mitführung von zumindest zwei verschiedenen Materialsorten und/oder Streustoffen, wobei jedem Vorratsbehälter und/oder jedem Streustoff jeweils zumindest zwei eigene Dosierorgane und zumindest zwei eigene Verteilorgane zugeordnet sind, wobei das jeweilige Dosierorgan dem ihm zugeordneten Verteilorgan das auszubringende Material in einstellbarer Weise zuleitet, wobei die verschiedenen Materialsorten und/oder Streustoffe von jeweils verschiedenen Verteilorganen verteilt werden, wobei das Material zumindest auf einige der Schleuderscheiben mittels Zuleitungsschächte (24, 36, 45) geleitet wird, dadurch gekennzeichnet, daß die Wandungen der Zuleitungsschächte (24) zumindest teilweise aus einem durchsichtigen Material (40, 44, 46) bestehen.

2. Schleuderstreuer nach Anspruch 1, dadurch gekennzeichnet, daß im Bereich des durchsichtigen Materials (40, 44, 46) Skalen und/oder Markierungen (41) an den Zuleitungsschächten (24, 36, 45) angeordnet sind.

3. Schleuderstreuer, insbesondere nach Anspruch 1, dadurch gekennzeichnet, daß im Vorratsbehälter (31, 32) oberhalb der Dosierorgane (20) jeweils ein Zuführungsschacht (45) für das Ausbringen von Material, welches in kleinen Mengen pro Flächeneinheit ausgebracht wird, vorgesehen ist.

4. Schleuderstreuer nach einem oder mehreren der vorstehenden Ansprüche, dadurch gekennzeichnet, daß an jedem Zuleitungsschacht (24, 36, 45) eine Markierung (42) angebracht ist, welche die minimalste Restmenge (kritische Restmenge), bis zu welcher Material ausgebracht werden kann, angebracht ist.

5. Schleuderstreuer nach einem oder mehreren der vorstehenden Ansprüche, dadurch gekennzeichnet, daß zumindest im Bereich der Zuleitungsschächte (24) jeweils zumindest ein Füllstandssensor (43) zur Überwachung der Restmenge angeordnet ist.

6. Schleuderstreuer nach einem oder mehreren der vorstehenden Ansprüche, dadurch gekennzeichnet, daß die Sensoren (43) mit einer Überwachungseinrichtung (28) verbunden sind, die spätestens bei Erreichen der kritischen Restmenge ein Warnsignal abgibt.

7. Verfahren zum Einsatz eines Schleuderstreuers mit zumindest zwei Vorratsbehältern für die getrennte Mitführung von zumindest zwei verschiedenen Materialsorten und/oder Streustoffen, wobei jedem Vorratsbehälter und/oder jedem Streustoff jeweils zumindest zwei eigene Dosierorgane und zumindest zwei eigene Verteilorgane zugeordnet sind, wobei das jeweilige Dosierorgan dem ihm zugeordneten Verteilorgan das auszubringende Material in einstellbarer Weise zuleitet, wobei die verschiedenen Materialsorten und/oder Streustoffe von jeweils verschiedenen Verteilorganen verteilt werden, wobei das Material zumindest auf einen Teil der Schleuderscheiben mittels Zuleitungsschächte geleitet wird, dadurch gekennzeichnet, daß beim Ausbringen von den zwei Materialsorten, das Material, welches in kleineren Mengen als das andere Material ausgebracht wird, in den Vorratsbehälter (1, 31, 32), welchem die Zuleitungsschächte (24, 36) zugeordnet sind, und/oder in die Zuleitungsschächte (45) eingefüllt wird.
